# EUROPEAN PATENT SPECIFICATION

(11) **EP 3 722 152 B1**
(45) Date of publication and mention of the grant of the patent: **30.04.2025**
(21) Application number: 20165710.3
(22) Date of filing: 25.03.2020
(51) Int. Cl.: B60Q 1/50

(54) **VEHICLE CONFIGURED TO PLATOONING DRIVE AND COMPRISING A SECURITY SYSTEM**
FÜR KOLONNENFAHRT KONFIGURIERTES FAHRZEUG MIT EINEM SICHERHEITSSYSTEM
VÉHICULE CONFIGURÉ POUR COMMANDE DE FORMATION DE PELOTON COMPRENANT UN SYSTÈME DE SÉCURITÉ

(30) Priority: 26.03.2019 IT 201900004355
(43) Date of publication of application: 14.10.2020
(60) Divisional application: 24223376.5
(73) Proprietor: Iveco S.p.A., 10156 Torino (IT)
(72) Inventor: CALAON, Ivan, 10125 TORINO (IT)
(74) Representative: Studio Torta S.p.A.

(56) References cited:
- EP-A1- 3 178 698
- WO-A1-2018/135630
- WO-A1-2018/225241
- DE-A1- 102016 220 054
- US-A1- 2007 222 574
- US-A1- 2012 025 962
- US-A1- 2016 257 243
- US-A1- 2017 361 762
- US-A1- 2018 178 712
- US-A1- 2018 186 283
- US-A1- 2019 001 818

## Description

### TECHNICAL FIELD

The invention relates to a vehicle for a platooning driving mode, in particular to a vehicle for a platooning driving mode comprising a security system.

### KNOWN STATE OF THE ART

Heavy vehicles, such as for example trucks, can make movements in a so-called "platooning" mode, namely a mode in which the vehicles of a convoy share operating information in order to process a control strategy aimed at automatically driving a series of follower vehicles following a leader vehicle (EGO vehicle).

The leader vehicle comprises an electronic control unit, which is configured to calculate, the speed and the relative positions of the follower vehicles being known, control parameters of the vehicles themselves in order to reduce the aerodynamic resistance, exploiting the slipstream of the vehicles driving in a row. This mechanism allows for significant reductions, around 10-20%, of the consumption of fuel in motorways. Anyway, the driver of each vehicle can always have priority over the automatic controls and, hence, change trajectory/speed when needed.

The communication - among the vehicles - of the data needed for the calculation of the platooning mode is carried out by means of a plurality of technologies, such as radar, GPS, Wi-Fi, etc.; this communication through radio waves takes place thanks to known antennas. Furthermore, the vehicles can comprise sensor means, for example optical or ultrasound sensors, which are configured to calculate distances between the vehicles of the platooning convoy or from other vehicles close to the latter. The communication of data usually is a V2V communication, namely a vehicle-to-vehicle communication, or, in some case, it can be an I2V communication, namely an infrastructure-to-vehicle communication.

Therefore, the platooning vehicles are connected to one another in a broadcast mode, which allows them to share with one another any information concerning the platooning. A crucial example of this information is the presence of a vehicle inside the convoy of platooning vehicles.

Indeed, even though the vehicles proceed in a row and are relatively close to one another, there is a space that allows for the introduction of a motorcycles or even of a four-wheel vehicle overtaking the convoy.

Currently, only a few vehicles can receive information concerning the platooning convoy, for example the composition thereof, the length of the convoy of vehicles or the space between one vehicle and the other. On the contrary, the majority of vehicles cannot communicate with the convoy of platooning vehicles and, therefore, drivers perceive this technology as potentially risky and, in case of overtaking, do not know how much the passing will take, thus increasing the feeling of danger while driving or, even worse, the risk of reckless driving.

This perception potentially arises also in vehicles, such as commercial vehicles, driving in driverless, autonomous mode.

An example of known platooning system according to the preamble of the invention is shown in US2017/0361762 A1. In US2017/0361762 A1 it is provided a system for projecting an information on the road along the road direction between vehicles. However, such system suffers of the problem that such information is not easily visible to the users and may interfere with vehicles that may position between the platooning system.

Another example of known system is disclosed in US2019001818A1.

Therefore, it is necessary to improve the safety perceived when dealing with a convoy of vehicles driving in platooning mode.

The object of the invention is to fulfil the needs discussed above.

### SUMMARY OF THE INVENTION

The aforesaid object is reached by a vehicle configured for a platooning driving mode and comprising security means, according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view showing a plurality of vehicles driving in platooning mode and comprising a security system according to the invention,
- figure 2 is a schematic view from the top showing a plurality of vehicles driving in platooning mode and comprising a security system according to a first embodiment of the invention; and
- figure 3 is a schematic view from the top showing a plurality of vehicles driving in platooning mode and comprising a security system according to a second embodiment of the invention.

### DETAILED DESCRIPTION OF THE INVENTION

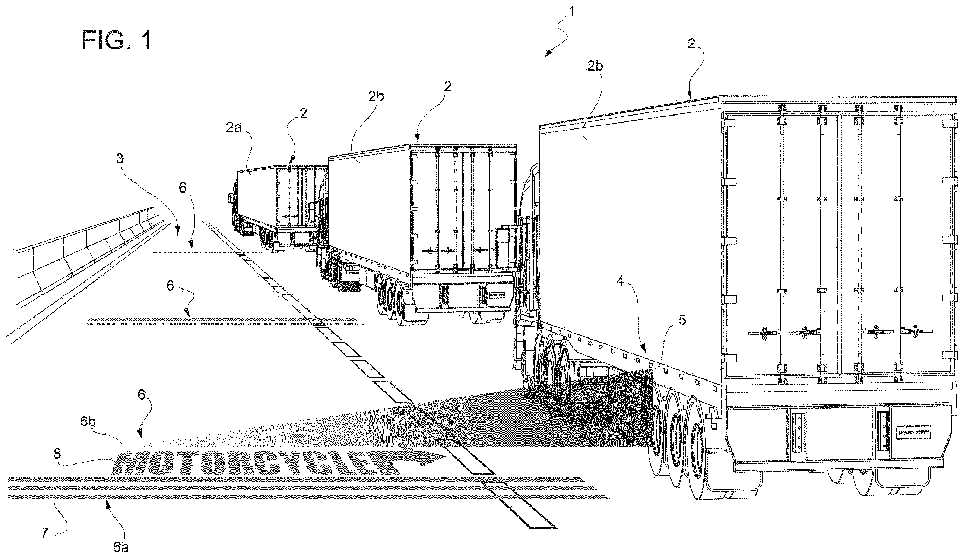

Figures 1 to 3 show a convoy 1 of vehicles 2 driving in platooning mode, in particular comprising a first leader vehicle 2a and a series of follower vehicles 2b driving on a road 3.

As it is known, each vehicle comprises known communication means, which are not shown herein and are configured to enable the communication between the platooning vehicles 2, and a known control unit, which is not shown herein and is electrically connected to the communication means as well as comprises processing means, which are configured to receive and process the information received through the communication means and to control the vehicle 2 accordingly. Conveniently, as it is known, each vehicle 2 further comprises sensors (not shown), for example optical or ultrasound sensors, which are configured to calculate distances between the vehicles 2 of the platooning convoy 1 or from other vehicles close to the latter. The sensors are electrically connected to the relative electronic control unit of each vehicle, which is configured to acquire the relative data. In particular, each electronic control unit of the vehicles 2 of the convoy 1 is configured to process the data coming from each vehicle 2 and to also control their driving accordingly.

According to the invention, each vehicle 2 of the platooning convoy 1 comprises security means 4, which are configured to display information 6 concerning the platooning convoy 1 so that the information 6 is visible to other users of the road 3.

The information 6 concerning the platooning convoy 1 can be any information listed in claim 1 concerning the composition of the convoy 1 or the sharing of useful information listed in claim 1, as discussed more in detail below.

Moreover, the information can be represented in a graphical manner, through decodable symbols, or in an alphabetical form, through lettering in one or more languages.

Each security means 4 conveniently is electrically connected to the electronic control unit of each vehicle 2, which is configured to control the security means 4 so that they transmit the relative information 6 to be displayed to other users of the road 3.

In particular, the security means 4 comprise projector means 5, which are configured to project the aforesaid information 6 on the road 3. These projector means 5 can comprise known projectors, for example laser projectors, which are configured to project a light that allows the information 6 to be displayed on the road under any weather condition, for example in the day or in the night, with rain or fog. For example, these projector means 5 can be configured to handle the light intensity of the projection and/or the graphical dimensions thereof based on the light or on the environmental condition.

These projector means are carried by the vehicle 2 so as not to interfere with the visual field of other drivers of other vehicles passing by. According to the invention, they are carried by portions of the vehicle that are integral to the frame thereof and are configured to project the information 6 on the road surface with an angle α that is ranging from 15° to 20°, relative to a horizontal axis, which is parallel to the plane of the road 3, so as not to blind either the driver or the passengers of any vehicle overtaking the convoy.

As already mentioned above, the information 6 can comprise items of information concerning different variables of the platooning convoy 1.

Information that can be displayed singularly or in combinations can be found below:
- mean distance between the vehicles 2 of the convoy 1;
- mean speed of the vehicles 2 of the convoy 1;
- emergency conditions;
- change in the distance between the vehicles 2
- presence of possible intruder vehicles in the convoy 1.

Other possible information that can be displayed in embodiments that are not encompassed by the present invention are following:
- information concerning the composition and/or length of the platooning convoy;
- activation/deactivation of the platooning mode.

In particular, in the case described herein, the information 6 comprises a graphical portion 6a projecting at least one line 7 crosswise to the road 3, the number of lines 7 indicating the progressive number of the queuing vehicle projecting the information. For example, the third vehicle in the row projects three parallel lines, which are transverse and close to one another. In addition, the information 6 comprises an at least partly alphabetical portion 6b projecting a lettering 8, which can be read in the direction of the road 4 and indicates, for example, the presence and/or the type on an intruder vehicle.

The operation of a convoy 1 of platooning vehicles 2 comprising security means 4 according to the invention is the following.

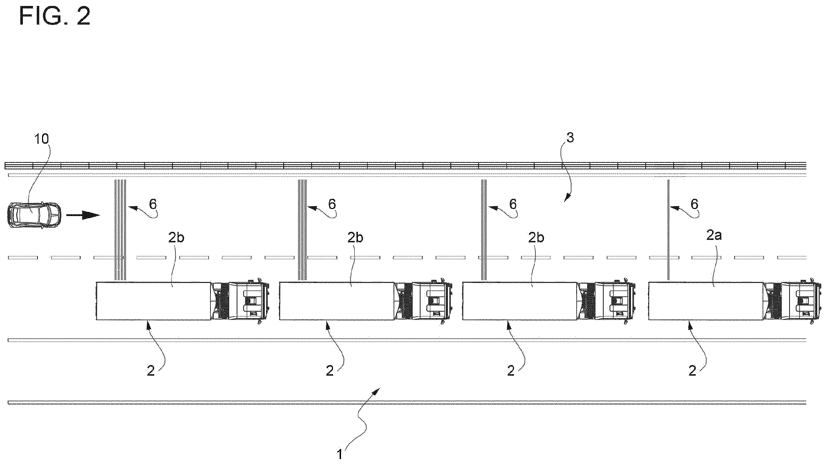

With reference to figure 2, a vehicle 10 which is not part of the convoy 1 is starting to overtake a convoy 1 of platooning vehicles 2 consisting of four vehicles 2. The security means 4 of each vehicle, hence, are controlled so as to project, by means of projector means 5, a relative information 6. According to what described above, each vehicle projects a graphical portion 6a comprising lines 7, which indicates the number of vehicles 2 that are part of the convoy 1. Therefore, the driver of the vehicle 10 can learn how long the convoy 1 is and, hence, how much time he/she needs to overtake the convoy, before starting to do so.

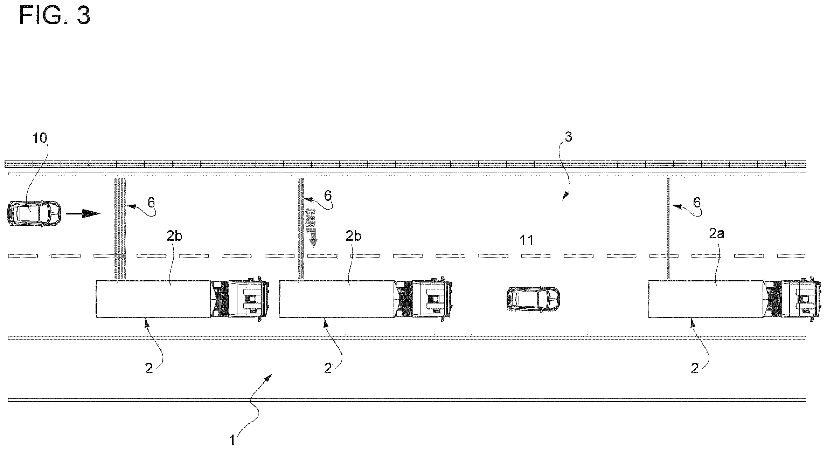

With reference to figure 3, a vehicle 10 is starting to overtake a convoy 1 of platooning vehicles 2 consisting of three vehicles 2 with a further vehicle 11 interposed between the leader vehicle 2a and the first follower vehicle 2b. The security means 4 of each vehicle, hence, are controlled so as to project, by means of projector means 5, a relative information 6. According to what described above, each vehicle projects a graphical portion 6a comprising lines 7, which indicates the number of vehicles 2 that are part of the convoy 1. Furthermore, the first follower vehicle 2b, which is controlled by the relative electronic control unit, further projects a graphical portion 6b indicating the presence of the intruder vehicle 11. Hence, the driver of the vehicle 10 can understand how long the convoy 1 is, how much time he/she needs to overtake it, before starting to do so, and that, while overtaking the convoy, the presence of the intruder vehicle 11 in the convoy 1 must be taken into consideration.

Owing to the above, the advantages of a convoy 1 of platooning vehicles 2 comprising security means 4 according to the invention are evident.

The security means 4 allow any other user of the road to be provided with essential information concerning the convoy 1 of platooning vehicles 2, thus making it easier for him/her to overtake the convoy.

In particular, this method increases the acceptance, on an unconscious level, of the platooning driving system, which can potentially be perceived as risky by other users of the road.

Basically, the entire road safety is increased, since users of overtaking vehicles are constantly informed on the state of the convoy 1 and, hence, can better asses, for they receive relevant and not immediately visible information, whether and how to overtake said convoy.

As far as the system described above is concerned, the projector means 5 allow the information 6 to be displayed in an economic fashion, so as to be visible under different weather conditions and, furthermore, thanks to their arrangement, without bothering/blinding other users of the road.

The graphical/symbolic and alphanumeric customization of the information 6 further makes the system versatile and capable of being used in different territories having different graphical representations and/or different languages.

Finally, the convoy 1 of platooning vehicles 2 comprising security means 4 according to the invention can be subjected to changes and variants, which, though, do not go beyond the scope of protection set forth in the appended claims.

For example, it is possible to change the shape and/or the content of the graphical information 6 shown to other users of the road as well as the generation thereof and/or where the information can be displayed.

For instance, the generation of the information can be controlled and, hence, the information can be displayed when the convoy 1 is moving or only when the last vehicle of the row detects, through further known sensors, that a vehicle 10 is approaching the convoy 1 of platooning vehicles 2, then the display of the information can be deactivated when there are no vehicles 10 close to the convoy 1.

## Claims

1. A vehicle (2) for driving on a road (3), said vehicle (2) comprising an electronic control unit provided with processing means configured to enable a platooning drive of said vehicle (2) with respect to at least a further vehicle (2) of a convoy (1) of platooning vehicles, said vehicle (2) comprising security means (4), the electronic control unit being configured to control said security means (4) to display information (6), relative to said convoy (1) of vehicles (2) and/or of said vehicle (2) with respect to said convoy (1), visible to other users of said road (3), wherein said security means (4) comprise projector means (5) configured to project said information (6) on said road (3), **characterized in that** said projector means (5) are carried by a frame of said vehicle (1) at a position closer to said road (3) than to a top end of said vehicle (2) along a vertical axis perpendicular to the plane of said road (3); said projector means (5) being configured to project said information (6) on said road (3) transversally with respect to road direction, said projector means (5) projecting from said vehicle (2) with an upper angle comprised between 15° and 20° with respect to a horizontal axis parallel to the plane of said road (3);
wherein said information (6) comprises the indication of the presence of foreign vehicles (11) in said convoy (1) of vehicles (2); and/or
wherein said information (6) comprises a change in the distance between the vehicle (2) with respect to said further vehicle (2) of said convoy (1); and/or
wherein said information (6) comprises emergency conditions; and/or wherein said information (6) comprises a mean distance between said vehicles (2) of said convoy (1); and/or
wherein said information (6) comprises a mean speed of said vehicles (2) of said convoy (1).

2. The vehicle according to claim 1, wherein said projector means (5) comprise laser means.

3. The vehicle according to one of the preceding claims, wherein said information (6) comprises a graphical portion (6a) and/or an alphabetical portion (6b) each of said portions (6b) representing information relative to said convoy (1).

4. A convoy (1) of vehicles (2) according to any one of the preceding claims.

## Patentansprüche

1. Ein Fahrzeug (2) zum Fahren auf einer Straße (3), das Fahrzeug (2) umfassend:
eine elektronische Steuereinheit mit Verarbeitungsmitteln, die eingerichtet sind, um eine Platooning-Fahrt des Fahrzeugs (2) in Bezug auf mindestens ein weiteres Fahrzeug (2) eines Konvois (1) von Platooning-Fahrzeugen zu ermöglichen; wobei das Fahrzeug (2) Sicherheitsvorrichtungen (4) umfasst, wobei die elektronische Steuereinheit eingerichtet ist, die Sicherheitsvorrichtungen (4) zu steuern, um Informationen (6) anzuzeigen, die sich auf den Konvoi (1) von Fahrzeugen (2) und/oder das Fahrzeug (2) in Bezug auf den Konvoi (1) beziehen und für andere Benutzer der Straße (3) sichtbar sind;
wobei die Sicherheitsvorrichtungen (4) Projektionsmittel (5) umfassen, die eingerichtet sind, die Informationen (6) auf die Straße (3) zu projizieren;
**dadurch gekennzeichnet, dass** die Projektionsmittel (5) an einem Rahmen des Fahrzeugs (1) an einer Position, die näher zur Straße (3) als zum oberen Ende des Fahrzeugs (2) ist, entlang einer vertikalen Achse senkrecht zur Ebene der Straße (3) angeordnet sind;
wobei die Projektionsmittel (5) eingerichtet sind, die Informationen (6) quer in Bezug zur Fahrtrichtung auf die Straße (3) zu projizieren, wobei die Projektionsmittel (5) vom Fahrzeug (2) aus mit einem oberen Winkel zwischen 15° und 20° in Bezug auf eine horizontale Achse parallel zur Ebene der Straße (3) projizieren;
wobei die Informationen (6) einen Hinweis auf die Anwesenheit fremder Fahrzeuge (11) im Konvoi (1) der Fahrzeuge (2) umfassen; und/oder
wobei die Informationen (6) eine Änderung des Abstands zwischen dem Fahrzeug (2) und des weiteren Fahrzeugs (2) des Konvois (1) umfassen; und/oder
wobei die Informationen (6) Notfallzustände umfassen; und/oder
wobei die Informationen (6) einen mittleren Abstand zwischen den Fahrzeugen (2) des Konvois (1) umfassen; und/oder
wobei die Informationen (6) eine mittlere Geschwindigkeit der Fahrzeuge (2) des Konvois (1) umfassen.

2. Das Fahrzeug nach Anspruch 1, wobei die Projektionsmittel (5) Lasermittel umfassen.

3. Das Fahrzeug nach einem der vorhergehenden Ansprüche, wobei die Informationen (6) einen grafischen Anteil (6a) und/oder einen alphabetischen Anteil (6b) umfassen, wobei jeder dieser Anteile (6b) Informationen in Bezug auf den Konvoi (1) darstellt.

4. Ein Konvoi (1) von Fahrzeugen (2) gemäß einem der vorhergehenden Ansprüche.

## Revendications

1. Véhicule (2) destiné à circuler sur une route (3), ledit véhicule (2) comprenant une unité de commande électronique dotée de moyens de traitement configurés pour permettre une circulation en peloton dudit véhicule (2) par rapport à au moins un autre véhicule (2) d'un convoi (1) de véhicules circulant en peloton, ledit véhicule (2) comprenant des moyens de sécurité (4), l'unité de commande électronique étant configurée pour commander lesdits moyens de sécurité (4) afin qu'ils affichent des informations (6), relatives audit convoi (1) de véhicules (2) et/ou dudit véhicule (2) par rapport audit convoi (1), visibles pour les autres usagers de ladite route (3), dans lequel lesdits moyens de sécurité (4) comprennent des moyens de projection (5) configurés pour projeter lesdites informations (6) sur ladite route (3), **caractérisé en ce que** lesdits moyens de projection (5) sont portés par un cadre dudit véhicule (1) à une position plus proche de ladite route (3) que d'une extrémité supérieure dudit véhicule (2) le long d'un axe vertical perpendiculaire au plan de ladite route (3) ; lesdits moyens de projection (5) étant configurés pour projeter lesdites informations (6) sur ladite route (3) transversalement par rapport à une direction de route, lesdits moyens de projection (5) faisant saillie dudit véhicule (2) avec un angle supérieur compris entre 15° et 20° par rapport à un axe horizontal parallèle au plan de ladite route (3) ;
dans lequel lesdites informations (6) comprennent l'indication de la présence de véhicules étrangers (11) dans ledit convoi (1) de véhicules (2) ; et/ou
dans lequel lesdites informations (6) comprennent un changement de la distance entre le véhicule (2) par rapport audit autre véhicule (2) dudit convoi (1) ; et/ou
dans lequel lesdites informations (6) comprennent des conditions d'urgence ; et/ou
dans lequel lesdites informations (6) comprennent une distance moyenne entre lesdits véhicules (2) dudit convoi (1) ; et/ou
dans lequel lesdites informations (6) comprennent une vitesse moyenne desdits véhicules (2) dudit convoi (1).

2. Véhicule selon la revendication 1, dans lequel lesdits moyens de projection (5) comprennent des moyens laser.

3. Véhicule selon l'une des revendications précédentes, dans lequel lesdites informations (6) comprennent une partie graphique (6a) et/ou une partie alphabétique (6b), chacune desdites parties (6b) représentant des informations relatives audit convoi (1).

4. Convoi (1) de véhicules (2) selon l'une quelconque des revendications précédentes.
